# EUROPÄISCHE PATENTSCHRIFT

(11) **EP 2 840 378 B1**
(45) Veröffentlichungstag und Bekanntmachung des Hinweises auf die Patenterteilung: **26.10.2016**
(21) Anmeldenummer: 14180003.7
(22) Anmeldetag: 06.08.2014
(51) Int. Cl.: G01N 21/958, G01M 99/00, B60S 1/08

(54) **Verfahren zum Detektieren von Flüssigkeiten auf einer Scheibe eines Fahrzeugs**
Method for detecting liquids on a window of a vehicle
Procédé de détection de liquides sur une vitre d'un véhicule

(30) Priorität: 21.08.2013 DE 102013216571
(43) Veröffentlichungstag der Anmeldung: 25.02.2015
(73) Patentinhaber: Bayerische Motoren Werke Aktiengesellschaft, 80809 München (DE)
(72) Erfinder: Vollmer, Hannes, 80807 München (DE)

(56) Entgegenhaltungen:
- EP-A1- 0 559 524
- EP-A1- 1 923 695
- US-A- 4 647 197

## Beschreibung

Die Erfindung betrifft ein Fahrzeug mit einer Vorrichtung zum Detektieren von Flüssigkeiten auf einer transparenten Scheibe eines Fahrzeugs, insbesondere eines Personenkraftfahrzeugs.

Um die Sichtfreihaltung durch Scheiben eines Personenkraftfahrzeugs während einer Regenfahrt zu gewährleisten, wird bisher in Prüfständen eine Regenfahrt mit fluoreszierender Flüssigkeit nachgeahmt. Zur Herstellung der fluoreszierenden Flüssigkeit werden dem Wasser Additive wie Bleichmittel zugemischt. Durch eine Beleuchtung mit ultraviolettem Licht wird das fluoreszierende Gemisch angeregt und emittiert in den sichtbaren Wellenlängenbereich phasenverschobenes Licht. Mit dem Gemisch beaufschlagte Flächen treten damit deutlicher in Erscheinung als nicht beaufschlagte Flächen und können mit Kameras erfasst werden. Eine nachfolgende Bildanalyse, sei es manuell oder automatisiert, ermöglicht die Detektion von beaufschlagten Flächen. Dieses Verfahren eignet sich jedoch nur für den Versuch im Prüfstand, da im realen Straßenversuch der Regen nicht fluoresziert und auch nicht beeinflusst werden kann. Durch die dem Wasser zugefügten Additive werden zudem je nach Konzentration die Fließeigenschaften des Gemisches beeinflusst. Hierdurch besteht die Gefahr der Verfälschung der Flüssigkeitsverteilung bzw. des zugehörigen "Verschmutzungsbilds". Bleichmittel sind außerdem chemische Substanzen, welche gewisse Sicherheitsvorkehrungen erforderlich machen. Die zwangsweise Nutzung eines Prüfstands verursacht zudem hohe Kosten.

EP 1 923 695 A1 offenbart eine Vorrichtung zur Erfassung von Feuchtigkeit an einer Außenseite einer Scheibe, insbesondere Windschutzscheibe, eines Kraftfahrzeugs, mit einer im Bereich einer Innenseite der Scheibe angeordneten Lichtquelle zum Ausstrahlen von Licht in die Scheibe und mit einem Detektionsmittel zum Detektieren von an der Außenseite der Scheibe total reflektiertem Licht der Lichtquelle.

Es ist die **Aufgabe** der vorliegenden Erfindung, die Nachteile des Standes der Technik zumindest teilweise zu überwinden und insbesondere eine verbesserte Möglichkeit zur Detektion von Flüssigkeiten auf einer Scheibe eines Fahrzeugs bereitzustellen. Es ist insbesondere eine Aufgabe, eine verbesserte Möglichkeit zur Detektion von Regenwasser auf einer Scheibe eines Fahrzeugs bereitzustellen. Es ist noch eine Aufgabe, eine verbesserte Möglichkeit zur Detektion einer Verteilung von Wasser auf einer Scheibe eines Fahrzeugs bereitzustellen, insbesondere von Regenwasser und/oder von von vorausfahrenden Fahrzeugen aufgewirbeltem Wasser.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Fahrzeug mit einer Vorrichtung zum Detektieren von Flüssigkeiten auf einer transparenten Scheibe des Fahrzeugs, wobei die Vorrichtung zum Durchführen eines Verfahrens ausgebildet ist, das mindestens folgende Schritte aufweist: Anordnen einer Schicht an zumindest einem Teil einer Innenseite der Scheibe und Aufnehmen mindestens eines Bilds zumindest eines Teils der Schicht mittels einer Bildaufnahmeeinheit, und wobei die Bildaufnahmeeinheit zumindest auf einen Teil der Schicht gerichtet ist, wobei das Aufnehmen des mindestens einen Bilds ein Aufnehmen von Licht, das von einer Außenseite der Scheibe kommend die Scheibe durchdringt und dann an der Schicht abgebildet wird, umfasst.

Bei Aufbringung von Flüssigkeit auf eine Außenseite der Scheibe ändert sich das Bild einer auf die Schicht gerichteten Bildaufnahmeeinrichtung besonders deutlich. Durch die Bildänderung kann auf qualitative und/oder quantitative Größen der Flüssigkeitsbenetzung der Scheibe rückgeschlossen werden. Dazu reicht die Aufnahme eines einzigen Bilds aus. Es können grundsätzlich aber auch mehrerer Bilder aufgenommen werden. Es ist so insbesondere auf einfache Weise möglich, quantitative Aussagen zu Position, Fläche und Verlauf von Flüssigkeit, insbesondere Wasser, auf einer Scheibe zu tätigen. Ein weiterer Vorteil besteht darin, dass das Verfahren im realen Straßenversuch anwendbar ist. Es ermöglicht ohne die Zugabe von Additiven auch im Prüfstand die Detektion von mit Wasser beaufschlagten Regionen. Das Fließverhalten des Wassers wird aufgrund eines nun ermöglichten Fehlens von Additiven nicht beeinflusst. Bei der nun möglichen Verwendung von reinem Wasser entfallen alle Sicherheitsbeden ken bezüglich chemischer Substanzen.

Unter einer transparenten Scheibe mag eine Scheibe verstanden werden, durch welche hindurch ein Bild wahrnehmbar ist und z.B. nicht nur dessen Schemen. Die transparente Scheibe mag insbesondere eine klare oder eine getönte Scheibe sein.

Die Schicht ist nicht-volltransparent, also nicht über die ganze Fläche vollständig transparent. Sie mag vielmehr z.B. transluzent oder lichtundurchlässig sein, was auch als "nicht transparent" bezeichnet werden kann. Die Schicht mag aber auch einen transparenten Grundkörper aufweisen, der mit einem nicht-transparenten Muster versehen ist (also nur bereichsweise bzw. außerhalb des Musters transparent sein).

Die Innenseite der Scheibe ist insbesondere diejenige Seite, welche im eingebauten Zustand einem Innenraum des Fahrzeugs zugewandt ist. Entsprechend mag eine Außenseite der Scheibe insbesondere diejenige Seite sein, welche dem äußeren Umfeld des Fahrzeugs zugewandt ist. Die Flüssigkeit wird also auf die Außenseite der Scheibe auftreffen.

Es ist eine Ausgestaltung, dass die Schicht an der Scheibe aufgebracht ist, diese also kontaktiert. Die Auflage mag direkt ober z.B. über eine Haftfolie erfolgen.

Es ist noch eine Ausgestaltung, dass die Schicht von der Scheibe beabstandet ist. Dies mag eine Auflösung verbessern. Ein Abstand der Schicht von der Scheibe beträgt vorzugsweise nicht mehr als fünf Zentimeter, insbesondere nicht mehr als 3 Zentimeter.

Es ist auch eine Ausgestaltung, dass die Vorrichtung zum Durchführen mindestens folgender Schritte ausgebildet ist: Anordnen einer transluzent lichtdurchlässigen Schicht an zumindest einem Teil einer Innenseite der Scheibe und Aufnehmen mindestens eines Bilds zumindest eines Teils der lichtdurchlässigen Schicht von einer der Scheibe abgewandten Seite aus. Diese Vorrichtung macht es sich zu Nutze, dass auf einer Außenseite der Scheibe befindliche Flüssigkeitsvolumina (z.B. Regentropfen und Rinnsale) Licht bündeln und damit auf der Innenseite der Scheibe heller erscheinen. Gleichzeitig kann aufgrund der Oberflächennormale am Rand der von den Flüssigkeitsvolumina benetzten Flächen kein Licht die Scheibe durchdringen. Wird auf der Innenseite der Scheibe eine transluzent lichtdurchlässige Schicht aufgebracht, werden die durch die Flüssigkeitsvolumina erzeugten Helligkeitsschwankungen mittels der Schicht besonders einfach sichtbar gemacht, insbesondere da Spiegelungen o. ä. praktisch nicht mit abgebildet werden.

Die transluzent lichtdurchlässige Schicht mag auch als eine opak lichtdurchlässige Schicht oder als eine diffus streuende Schicht ("Diffusorschicht") bezeichnet werden.

Es ist eine besonders preiswerte Ausgestaltung, dass die transluzent lichtdurchlässige Schicht aus Papier besteht. Zudem lässt sich Papier gut handhaben und z.B. kleben. Es ist aber z.B. auch eine opake, insbesondere milchig-weiße, Folie einsetzbar, welche sich insbesondere dann, wenn sie selbsthaftend ist, vorteilhaft einfach an der Scheibe anbringbar ist.

Die transluzent lichtdurchlässige Schicht mag insbesondere an der Scheibe aufgebracht sein, also auch an der Scheibe anliegen.

Es ist noch eine Ausgestaltung, dass die Vorrichtung zum Durchführen mindestens folgender Schritte ausgebildet ist: Anordnen einer mit einem Farbmuster versehenen Fläche an zumindest einem Teil einer Innenseite der Scheibe und Aufnehmen mindestens eines Bilds zumindest eines Teils der mit einem Farbmuster versehenen Fläche durch die Scheibe hindurch. Bei dieser Vorrichtung wird ausgenutzt, dass sich dann, wenn sich hinter einer Scheibe eine vorbekannte Struktur befindet, diese sich von vorne betrachtet verzerrt, wenn die Vorderseite mit der Flüssigkeit benetzt ist, sich z.B. darauf ein Tropfen oder ein Rinnsal befindet. Die Verzerrung kann mit einer Kamera erfasst werden, und aufgenommene Bilder von einem Betrachter direkt oder durch eine nachfolgende Bildanalyse ausgewertet und/oder detektiert werden.

Das Farbmuster mag ein buntes Muster sein, z.B. unter Verwendung von Farben wie rot, grün, blau usw. Hierdurch mag sich eine besonders hohe Auflösung erreichen lassen. Es ist jedoch für eine preiswerte und einfache herstellbare Bereitstellung eines besonders kontrastreichen Farbmusters bevorzugte Ausgestaltung, dass das Farbmuster ein unbuntes Muster ist, also nur die Farben weiß, grau und schwarz aufweist.

Es ist für eine besonders einfache Auswertung bevorzugte Weiterbildung, dass das Farbmuster ein regelmäßiges Muster ist. Das regelmäßige Muster mag beispielsweise ein Muster in Form eines Gitters sein. Jedoch mag das Farbmuster auch ein bekanntes unregelmäßiges Muster sein.

Es ist eine für eine besonders hohe Kontrastwirkung bevorzugte Ausgestaltung, dass die mit dem Färbmuster versehene Fläche eine Seite einer lichtundurchlässigen Platte ist. Dadurch werden Durchlichteffekte vermieden.

Es wird bevorzugt, dass die mit dem Farbmuster versehene Fläche von der Scheibe beabstandet ist. Ein Abstand beträgt vorzugsweise nicht mehr als fünf Zentimeter, insbesondere nicht mehr als 3 Zentimeter.

Die Flüssigkeit ist bevorzugt Wasser ohne künstliche Zusätze, insbesondere Regenwasser oder von vorausfahrenden Fahrzeugen aufgewirbeltes Wasser.

Das Fahrzeug ist bevorzugt ein Kraftfahrzeug, insbesondere ein Personenkraftfahrzeug.

Die transparente Scheibe mag z.B. eine Scheibe eines Fahrzeuginsassenraums sein, z.B. eine Frontscheibe, Seitenscheibe oder Heckscheibe. Die Scheibe mag aber z.B. auch eine Abdeckscheibe einer Fahrzeugleuchte sein, z.B. eines Scheinwerfers. Die transparente Scheibe mag insbesondere eine Glasscheibe sein, ist aber nicht darauf beschränkt. So mag sie auch eine Kunststoffscheibe sein.

Es ist eine für eine gleichbleibende Abbildungsqualität bevorzugte Weiterbildung, dass die Schicht biegsam ist, um auch auf gekrümmte Scheiben vollflächig aufgesetzt werden zu können oder zu diesen einen gleichbleibenden Abstand einnehmen zu können. Die Schicht mag insbesondere eine dünne Schicht ein.

Das Aufnehmen mindestens eines Bilds mag insbesondere das Aufnehmen einer zeitlichen Abfolge mehrerer Bilder umfassen.

Es ist eine Weiterbildung, dass sich dem Schritt des Aufnehmens des mindestens einen Bilds ein Schritt einer Bildauswertung anschließt. Dies vereinfacht eine schnelle und genaue Auswertung der aufgenommenen Bilder, insbesondere wenn die Bildauswertung vollautomatisch durchführbar ist. Die Bildauswertung mag beispielsweise aus dem durch die Scheibe aufgenommenen Verzerrungsbild eine Position bzw. Positionen, eine Flächengröße bzw. Flächengrößen und/oder einen Verlauf bzw. Verläufe von Flüssigkeit auf der Scheibe bestimmen können.

Es ist eine Ausgestaltung, dass die Bildaufnahmeeinheit im Inneren des Fahrzeugs zum Aufnehmen eines Bilds zumindest eines Teils einer lichtdurchlässigen Schicht von einer der Scheibe abgewandten Seite aus vorhanden ist. Dieses Fahrzeug weist den Vorteil auf, dass die Bildaufnahmeeinheit vor äußeren Einflüssen geschützt ist.

Es ist noch eine Ausgestaltung, dass die Bildaufnahmeeinheit außen am Fahrzeug angeordnet ist. Diese Ausgestaltung eignet sich insbesondere zum Aufnehmen von Bildern zumindest eines Teils oder Ausschnitts einer mit einem Farbmuster versehenen Fläche durch die Scheibe hindurch.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.1: zeigt als Schnittdarstellung in Seitenansicht einen Ausschnitt aus einem Personenkraftfahrzeug gemäß einem ersten Ausführungsbeispiel im Bereich einer Frontscheibe; und
- Fig.2: zeigt als Schnittdarstellung in Seitenansicht einen Ausschnitt aus einem Personenkraftfahrzeug gemäß einem zweiten Ausführungsbeispiel im Bereich einer Frontscheibe.

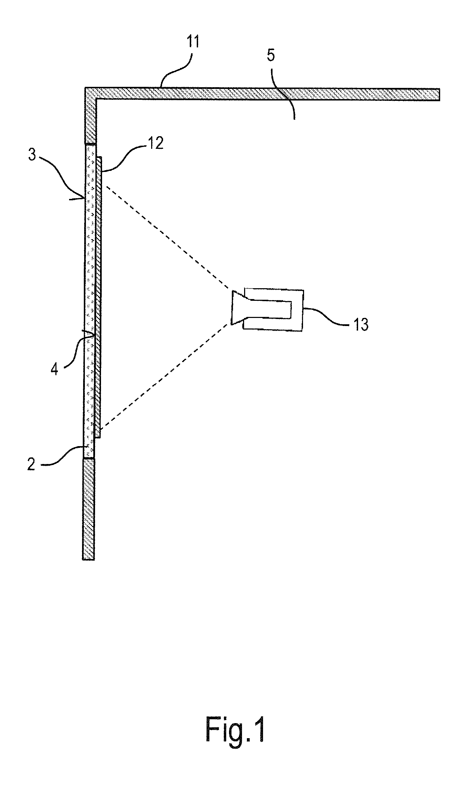

**Fig.1** zeigt ein Personenkraftfahrzeug 11 gemäß einem ersten Ausführungsbeispiel. Das Personenkraftfahrzeug 11 ist mit einer Messvorrichtung 12 - 13 zur Analyse eines Benetzungsverhaltens einer transparenten Seitenglasscheibe 2 an Ihrer Außenseite 3, insbesondere durch Regenwasser und/oder von vorausfahrenden Fahrzeugen aufgewirbeltes Wasser, ausgerüstet. An einem Teil der Seitenglasscheibe 2, insbesondere auf einer Beifahrerseite, ist an einer Innenseite 4 der Seitenglasscheibe 2 vollflächig eine transluzent lichtdurchlässige Schicht 12 aufgebracht, hier z.B. aus Papier. In einem Innenraum oder Fahrgastraum 5 des Personenkraftfahrzeugs 11 ist eine Kamera 13, z.B. eine Digitalkamera, installiert, welche von innen auf die lichtdurchlässige Schicht 12 gerichtet ist, wie durch die gestrichelten Linien angedeutet. An der Außenseite 3 der Scheibe befindliche Wasservolumina bündeln Licht, was an der transluzent lichtdurchlässigen Schicht 12 helle Bereiche erzeugt. Aufgrund der Oberflächennormale kann jedoch am Rand der von den Wasservolumina benetzten Flächen kein Licht die Scheibe 2 durchdringen, so dass sich dort dunklere Bereiche bilden. Folglich wird an der Schicht 12 ein Helligkeitsmuster erzeugt, mittels dessen ein Vorhandensein von Wasser auf der Scheibe 2 detektiert werden kann. Beispielsweise können quantitative und/oder qualitative Aussagen zu Position, Fläche und Verlauf des Wassers auf der Scheibe 2 getätigt werden. Daraus kann das Benetzungsverhalten analysiert werden, z.B. geschwindigkeitsabhängig. Die Detektion von Regenwasser kann beispielsweise während einer Fahrt des Personenkraftfahrzeugs 11 in einem realen Straßenversuch durchgeführt werden, folglich also auch ohne Zugabe von Additiven.

Die durch die Kamera 13 aufgenommenen Bilder können folgend einer Bildauswertung bzw. Bildanalyse unterzogen werden. Dazu mag eine Bildauswertungseinrichtung (o. Abb.) in dem Personenkraftfahrzeug 11 vorhanden sein, welche mit der Kamera gekoppelt ist. Alternativ mögen die Bilder der Kamera während der Messfahrt gespeichert werden und erst nach Ende der Messfahrt auf eine fahrzeugexterne Bildauswertungseinrichtung übertragen werden.

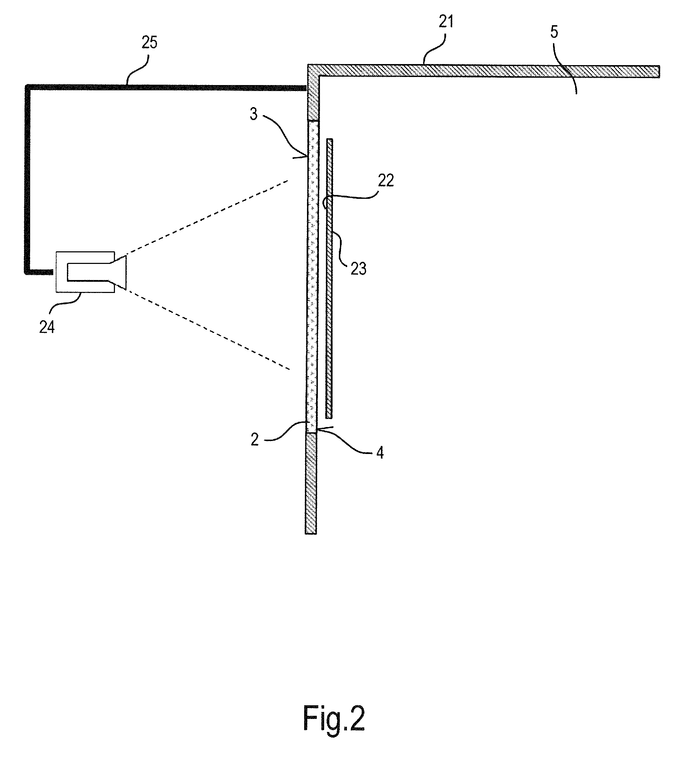

**Fig.2** zeigt ein Personenkraftfahrzeug 21 gemäß einem zweiten Ausführungsbeispiel. Das Personenkraftfahrzeug 21 als solches ist gleich zu dem Personenkraftfahrzeug 11 aufgebaut. Jedoch wird eine unterschiedliche Messvorrichtung 22 - 25 verwendet, bei der nun an einem Teil der Innenseite 4 der Scheibe 2 eine mit einem rein beispielhaft verwendeten schwarz-weißen, regelmäßigen Muster (z.B. einem Gittermuster) versehenen Fläche 22 einer z.B. lichtundurchlässigen oder hochgradig opaken Platte 23 beabstandet angeordnet ist, z.B. zwei Zentimeter. Das Muster zeigt nach außen bzw. in Richtung der Scheibe 2.

Eine, bevorzugt wasserdichte, Kamera 24 ist nun mittels einer Halterung 25 außen an dem Personenkraftfahrzeug 21 angeordnet und blickt, wie durch die gestrichelten Linien angedeutet, durch die Scheibe 2 hindurch auf die mit dem Muster versehene Fläche 22.

Bei diesem Messaufbau wird ausgenutzt, dass sich dann, wenn sich hinter der Scheibe 2 eine vorbekannte, sichtbare Struktur oder Muster befindet, diese sich von vorne betrachtet verzerrt, wenn die Vorderseite mit Wasser benetzt ist, sich z.B. darauf ein Tropfen oder ein Rinnsal befindet. Die Verzerrung kann mit der Kamera 24 erfasst werden. Es ist auch hierdurch auf einfache Weise möglich, quantitative Aussagen zu Position, Fläche und Verlauf von Wasser auf einer Scheibe zu tätigen. Ein weiterer Vorteil besteht auch hierbei darin, dass das Verfahren im realen Straßenversuch anwendbar ist, und folglich auch ohne Zugabe von Additiven.

Die durch die Kamera 24 aufgenommenen Bilder können folgend einer Bildauswertung bzw. Bildanalyse unterzogen werden.

Selbstverständlich ist die vorliegende Erfindung nicht auf die gezeigten Ausführungsbeispiele beschränkt.

Beide erfindungsgemäßen Vorrichtungen bzw. zugrundeliegende Verfahren beruhen auf der Brechung von Licht: tritt ein Lichtstrahl in ein optisch dichteres Medium, wird der Strahl in Richtung des Lotes gebrochen. Das Lot entspricht hierbei der lokalen Oberflächennormalen am Schnittpunkt zwischen den Medien.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 2: Seitenglasscheibe
- 3: Außenseite der Seitenglasscheibe
- 4: Innenseite der Seitenglasscheibe
- 5: Fahrgastraum des Personenkraftfahrzeugs
- 11: Personenkraftfahrzeug
- 12: transluzent lichtdurchlässige Schicht
- 13: Kamera
- 21: Personen kraftfahrzeug
- 22: mit einem Muster versehene Fläche
- 23: Platte
- 24: Kamera
- 25: Halterung

## Patentansprüche

1. Fahrzeug (11; 21) mit einer Vorrichtung (12-13; 22-25) zum Detektieren von Flüssigkeiten auf einer transparenten Scheibe (2) des Fahrzeugs (11; 21), wobei
- die Vorrichtung (12-13; 22-25) zum Durchführen eines Verfahrens ausgebildet ist, das mindestens folgende Schritte aufweist:
Anordnen einer Schicht (12; 23) an zumindest einem Teil einer Innenseite (4) der Scheibe (2) und
Aufnehmen mindestens eines Bilds zumindest eines Teils der Schicht (12; 23) mittels einer Bildaufnahmeeinheit (13; 24), und wobei
- die Bildaufnahmeeinheit (13; 24) zumindest auf einen Teil der Schicht (12; 23) gerichtet ist,
- **dadurch gekennzeichnet, dass** das Aufnehmen des mindestens einen Bilds ein Aufnehmen von Licht, das von einer Außenseite der Scheibe (2) kommend die Scheibe (2) durchdringt und dann an der Schicht (12; 23) abgebildet wird, umfasst.

2. Fahrzeug (11) nach Anspruch 1, wobei die Schicht (12) an der Scheibe (2) aufgebracht ist.

3. Fahrzeug (21) nach Anspruch 1, wobei die Schicht (23) von der Scheibe (2) beabstandet ist.

4. Fahrzeug (11) nach einem der vorhergehenden Ansprüche, wobei die Vorrichtung (12-13; 22-25) zum Durchführen mindestens der folgenden Schritte ausgebildet ist:
- Anordnen einer transluzent lichtdurchlässigen Schicht (12) an zumindest einem Teil einer Innenseite (4) der Scheibe (2) und
- Aufnehmen mindestens eines Bilds zumindest eines Teils der lichtdurchlässigen Schicht (12) von einer der Scheibe (2) abgewandten Seite der transluzent lichtdurchlässigen Schicht (12) aus.

5. Fahrzeug (11; 21) nach Anspruch 4, wobei die transluzent lichtdurchlässige Schicht (12) aus Papier oder opaker Folie besteht.

6. Fahrzeug (21) nach Anspruch einem der Ansprüche 1 bis 3, wobei die Vorrichtung (12-13; 22-25) zum Durchführen mindestens der folgenden Schritte ausgebildet ist:
- Anordnen einer mit einem Farbmuster versehenen Fläche (22) an zumindest einem Teil einer Innenseite (4) der Scheibe (2) und
- Aufnehmen mindestens eines Bilds zumindest eines Teils der mit dem Farbmuster versehenen Fläche (22) durch die Scheibe (2) hindurch.

7. Fahrzeug (21) nach Anspruch 6, wobei das Farbmuster ein buntes oder unbuntes Muster ist.

8. Fahrzeug (21) nach einem der Ansprüche 6 bis 7, wobei das Farbmuster ein regelmäßiges oder ein unregelmäßiges Muster ist.

9. Fahrzeug (21) nach einem der Ansprüche 6 bis 8, wobei die mit dem Farbmuster versehene Fläche (22) eine Seite einer lichtundurchlässigen Platte (23) ist.

10. Fahrzeug (11; 21) nach einem der vorhergehenden Ansprüche, wobei das Fahrzeug (11; 21) eine Bildauswertungseinrichtung aufweist, welche mit der Bildaufnahmeeinheit (13; 24) gekoppelt ist.

11. Fahrzeug (11; 21) nach einem der vorhergehenden Ansprüche, wobei mittels der Bildaufnahmeeinheit (13; 24) aufgenommene Bilder nach Ende einer Messfahrt des Fahrzeugs (11; 21) auf eine fahrzeugexterne Bildauswertungseinrichtung übertragbar sind.

12. Fahrzeug (21) nach einem der vorhergehenden Ansprüche, wobei die Vorrichtung (22-25) zum Durchführen eines Verfahrens ausgebildet ist, das mindestens folgenden weiteren Schritt aufweist:
- Auswerten einer Verzerrung mindestens eines mit der Bildaufnahmeeinheit (13; 24) aufgenommenen Bilds.

13. Fahrzeug (11) nach einem der vorhergehenden Ansprüche, wobei die Vorrichtung (12-13) zum Durchführen eines Verfahrens ausgebildet ist, das mindestens folgenden weiteren Schritt aufweist:
- Auswerten eines Helligkeitsmusters mindestens eines mit der Bildaufnahmeeinheit (13; 24) aufgenommenen Bilds.

14. Fahrzeug (11) nach einem der vorhergehenden Ansprüche 4 oder 5, wobei die Bildaufnahmeeinheit (13) im Inneren (5) des Fahrzeugs (11) vorhanden ist.

15. Fahrzeug (21) einem der vorhergehenden Ansprüche 6 bis 10, wobei die Bildaufnahmeeinheit (24) außen an dem Fahrzeug (21) angeordnet ist.

## Claims

1. A vehicle (11; 21) having a device (12-13; 22-25) for detecting liquids on a transparent window (2) of the vehicle (11; 21), wherein
- the device (12-13; 22-25) is configured to implement a method which comprises at least the following steps:
arranging a layer (12; 23) on at least one part of an inner surface (4) of the window (2) and
recording at least one image of at least one part of the layer (12; 23) by means of an image recording unit (13; 24), and wherein
- the image recording unit (13; 24)) is directed at least onto one part of the layer (12; 23),
- **characterised in that** the recording of the at least one image comprises a recording of light which passes through the window (2), coming from an outer surface of the window (2), and is then imaged on the layer (12; 23).

2. A vehicle (11) according to claim 1, wherein the layer (12) is applied to the window (2).

3. A vehicle (21) according to claim 1, wherein the layer (23) is at a distance from the window (2).

4. A vehicle (11) according to any one of the preceding claims, wherein the device (12-13; 22-25) is configured to implement at least the following steps:
- arranging a translucently light-permeable layer (12) on at least one part of an inner surface (4) of the window (2) and
- recording at least one image of at least one part of the light-permeable layer (12) from a side, remote from the window (2), of the translucently light-permeable layer (12).

5. A vehicle (11; 21) according to claim 4, wherein the translucently light-permeable layer (12) consists of paper or of opaque film.

6. A vehicle (21) according to any one of claims 1 to 3, wherein the device (12-13; 22-25) is configured to implement at least the following steps:
- arranging a surface (22), provided with a colour pattern, on at least one part of an inner side (4) of the window (2) and
- recording at least one image of at least one part of the surface (22), provided with the colour pattern, through the window (2).

7. A vehicle (21) according to claim 6, wherein the colour pattern is a multi-coloured or an achromatic pattern.

8. A vehicle (21) according to any one of claims 6 to 7, wherein the colour pattern is a regular or an irregular pattern.

9. A vehicle (21) according to any one of claims 6 to 8, wherein the surface (22) provided with the colour pattern is one side of a non-transparent plate (23).

10. A vehicle (11; 21) according to any one of the preceding claims, wherein the vehicle (11; 21) has an image evaluation device which is coupled to the image recording unit (13; 24).

11. A vehicle (11; 21) according to any one of the preceding claims, wherein images which have been recorded by the image recording unit (13; 24) can be transferred to an image evaluation device outside the vehicle at the end of a measurement run of the vehicle (11; 21).

12. A vehicle (21) according to any one of the preceding claims, wherein the device (22-25) is configured to implement a method which has at least the following further step:
- evaluating a distortion of at least one image recorded by the image recording unit (13; 24).

13. A vehicle (11) according to any one of the preceding claims, wherein the device (12-13) is configured to implement a method which has at least the following further step:
- evaluating a brightness pattern of at least one image recorded by the image recording unit (13; 24).

14. A vehicle (11) according to either of the preceding claims 4 or 5, wherein the image recording unit (13) is present in the interior (5) of the vehicle (11).

15. A vehicle (21) according to any one of the preceding claims 6 to 10, wherein the image recording unit (24) is arranged outside on the vehicle (21).

## Revendications

1. Véhicule (11 ; 21) comprenant un dispositif (12-13 ; 22-25) permettant de détecter des liquides sur une vitre transparente (2) de ce véhicule (11 ; 21), dans lequel :
- le dispositif (12-13 ; 22-25) est réalisé pour permettre la mise en oeuvre d'un procédé comprenant au moins les étapes suivantes consistant à :
- positionner une couche (12 ; 23) sur au moins une partie de la face interne (4) de la vitre (2), et
- prendre au moins une image d'au moins une partie de cette couche (12 ; 23) au moyen d'une unité de prise d'image (13 ; 24),
- l'unité de prise d'image (13 ; 24) étant dirigée vers au moins une partie de la couche (12 ; 23),
**caractérisé en ce que**
la prise de l'image comprend la prise de lumière qui traverse la vitre (2) en venant de la face externe de cette vitre (2), et est ensuite représentée sur la couche (12 ; 23).

2. Véhicule (11) conforme à la revendication 1, dans lequel la couche (12) est appliquée sur la vitre (2).

3. Véhicule (21) conforme à la revendication 1, dans lequel la couche (23) est située à distance de la vitre (2).

4. Véhicule (11) conforme à l'une des revendications précédentes dans lequel le dispositif (12-13 ; 22-25) est réalisé pour permettre la mise en oeuvre d'au moins l'une des étapes suivantes consistant à :
- positionner une couche (12) perméable à la lumière translucide sur au moins une partie de la face interne (4) de la vitre (2), et
- prendre au moins une image d'au moins une partie de la couche (12) perméable à la lumière à partir de la face de la couche (12) perméable à la lumière translucide située à l'opposé de la vitre (2).

5. Véhicule (11 ; 21) conforme à la revendication 4, dans lequel la couche (12) translucide perméable à la lumière est réalisée en papier ou en un film opaque.

6. Véhicule (21) conforme à l'une des revendications 1 à 3, dans lequel le dispositif (12-13 ; 22-25) est réalisé pour permettre la mise en oeuvre d'au moins les étapes suivantes consistant :
- positionner une surface (22) équipée d'un modèle coloré sur au moins une partie de la face interne (4) de la vitre (2), et
- prendre au moins une image d'au moins une partie de la surface (22) équipée du modèle coloré au travers de la vitre (2).

7. Véhicule (21) conforme à la revendication 6, dans lequel le modèle coloré est un modèle multicolore ou un modèle unicolore.

8. Véhicule (21) conforme à l'une des revendications 6 à 7, dans lequel le modèle coloré est un modèle régulier ou un modèle irrégulier.

9. Véhicule (21) conforme à l'une des revendications 6 à 8, dans lequel la surface (22) équipée du modèle coloré est une face d'une plaque non perméable à la lumière (23).

10. Véhicule (11 ; 21) conforme à l'une des revendications précédentes comprenant un dispositif d'exploitation d'images qui est accouplé à l'unité de prise d'image (13 ; 24).

11. Véhicule (11 ; 21) conforme à l'une des revendications précédentes dans lequel des images prises au moyen de l'unité de prise d'image (13 ; 24) peuvent être transférées sur une unité d'exploitation d'image externe au véhicule après la fin d'un parcours de mesure du véhicule (11 ; 21).

12. Véhicule (21) conforme à l'une des revendications précédentes dans lequel le dispositif (22-25) est réalisé pour permettre la mise en oeuvre d'un procédé qui comprend au moins l'étape supplémentaire consistant à :
- exploiter une distorsion d'au moins une image prise avec l'unité de prise d'image (13 ; 24).

13. Véhicule (11) conforme à l'une des revendications précédentes dans lequel le dispositif (12-13) est réalisé pour permettre la mise en oeuvre d'un procédé qui comprend au moins l'étape supplémentaire suivante consistant à :
- exploiter un modèle de luminosité d'au moins une image prise avec l'unité de prise d'image (13 ; 24).

14. Véhicule (11) conforme à l'une des revendications précédentes 4 ou 5, dans lequel l'unité de prise d'image (13) est située à la partie interne (5) du véhicule (11).

15. Véhicule (21) conforme à l'une des revendications précédentes 6 à 10, dans lequel l'unité de prise d'image (24) est située à l'extérieur du véhicule (21).
